# EUROPEAN PATENT APPLICATION

(11) **EP 4 492 620 A1**
(43) Date of publication of application: **15.01.2025**
(21) Application number: 24185359.7
(22) Date of filing: 28.06.2024
(51) Int. Cl.: H02J 7/00, H01M 10/48

(54) **POWER BATTERY AND CONTROL SYSTEM AND CONTROL METHOD THEREFOR**

(30) Priority: 30.06.2023 CN 202310802676; 30.06.2023 CN 202321712941 U; 12.06.2024 WO PCT/CN2024/098786
(71) Applicant: Eve Energy Co., Ltd., Huizhou, Guangdong 516006 (CN)
(72) Inventor: HU, Wenbin, Huizhou,Guangdong (CN)
(74) Representative: Herrero & Asociados, S.L.

(57) **Abstract**

A power battery and a control system and a control method therefor are disclosed. The control system includes a switch circuit, a sampling circuit, and a control circuit. The control circuit is connected to the switch circuit and the sampling circuit and configured to determine a state of the power battery and control performing a corresponding operation according to the state of the power battery.

## Description

### TECHNICAL FIELD

The present disclosure generally relates to the technical field of battery, and in particular to a power battery and a control system and a control method therefor.

### BACKGROUND

Power batteries are widely used in various fields such as a field of electric vehicles. When a power battery is overloaded or when there is a short-circuit fault in a power battery, it will cause great safety risks. Currently, there is a poor effect on monitoring a state of the power battery, and it is difficult to detect and react to a state situation of the power battery in time, which may lead to make the power battery unsafe.

### SUMMARY OF THE DISCLOSURE

On a first aspect, a control system for a power battery including a battery pack and a bus bar is provided. The control system includes a switch circuit, connected between the battery pack and the bus bar and configured to obtain and output a temperature of the switch circuit; a sampling circuit, connected between the battery pack and the bus bar and configured to sample a current of the battery pack; and a control circuit, connected to the switch circuit and the sampling circuit and configured to determine a state of the power battery and control performing a corresponding operation according to the state of the power battery.

On a second aspect, a power battery is also provided which includes: a battery pack; a bus bar; and the control system in the above first aspect, connected between the battery pack and the bus bar.

On a third aspect, a control method for a power battery is also provided. The power battery includes a battery pack, a bus bar, and the control system in the above first aspect, connected between the battery pack and the bus bar; the control method including: obtaining, by the control circuit, a temperature of the switch circuit and a current of the battery pack sampled by the sampling circuit; and determining, by the control circuit, a state of the power battery and control performing a corresponding operation according to the state of the power battery.

### BRIEF DESCRIPTION OF THE DRAWINGS

FIG. 1 is a schematic diagram of a control system for a power battery according to some embodiments of the present disclosure;
FIG. 2 is a schematic diagram of another control system for a power battery according to some embodiments of the present disclosure;
FIG. 3 is a schematic diagram of a relay circuit according to some embodiments of the present disclosure;
FIG. 4 is a schematic diagram of yet another control system for a power battery according to some embodiments of the present disclosure;
FIG. 5 is a schematic diagram of a fuse circuit according to some embodiments of the present disclosure;
FIG. 6 is a schematic diagram of a sampling circuit according to some embodiments of the present disclosure;
FIG. 7 is a schematic diagram of a power battery according to some embodiments of the present disclosure.
FIG. 8 is a flow chart of a control method for a power battery according to some embodiments of the present disclosure;
FIG. 9 is a flow chart of another control method for a power battery according to some embodiments of the present disclosure;
FIG. 10 is a flow chart of yet another control method for a power battery according to some embodiments of the present disclosure;
FIG. 11 is a flow chart of yet another control method for a power battery according to some embodiments of the present disclosure;
FIG. 12 is a flow chart of yet another control method for a power battery according to some embodiments of the present disclosure;
FIG. 13 is a flow chart of yet another control method for a power battery according to some embodiments of the present disclosure;
FIG. 14 is a flow chart of yet another control method for a power battery according to some embodiments of the present disclosure;
FIG. 15 is a flow chart of yet another control method for a power battery according to some embodiments of the present disclosure;
FIG. 16 is a flow chart of yet another control method for a power battery according to some embodiments of the present disclosure; and
FIG. 17 is a schematic diagram of a control circuit according to some embodiments of the present disclosure.

100: control system, 10: switch circuit, 20: sampling circuit, 30: control circuit, 40: battery pack, Ll: bus bar;
11: relay circuit, 12: fuse circuit, 13: relay, 14: first temperature sensor, 15: relay control sub-circuit;
a: power supply line, b: communication line;
16: second temperature sensor, 17: fuse, 21: sampler 22: third temperature sensor, 31: battery management circuit, 32: vehicle controller;
23: conductor portion, 24: processor;
200: power battery;
S101-S103, S201-S203, S301-S304, S401, S501, S601-S603, S701-S702, S801, S901-S902: block;
171: obtaining module, 172: determining module, 173: adjusting module.

### DETAILED DESCRIPTION

It should be noted that the terms "first", "second", etc. in the specification and claims of the present disclosure and the above-described drawings are used to distinguish between similar objects and need not be used to describe a particular order or sequence. It is to be understood that the data so used may be interchanged, where appropriate, so that the embodiments of the present disclosure described herein can be practiced in an order other than those illustrated or described herein. In addition, the terms "including" and "having", and any variations thereof, are intended to cover non-exclusive embodiments. For example, a process, method, system, product or device including a series of steps or circuits need not be limited to those steps or circuits clearly listed, but may include steps or circuits that are not clearly listed or are inherent to a process, method, system, product or device that is not clearly listed.

As stated in the above, there is currently a poor effect on monitoring a state of the power battery, and it is difficult to detect and react to a situation of the power battery in time, which may lead to safety problems of the power battery. For example, there is a poor effect on overload monitoring of the power battery, and it is difficult to detect and react to a situation of the power battery in time, which may make the power battery unsafe. For another example, when there is a short-circuit fault in a power battery, the power battery is usually protected with passive short-circuit only as the fuse is fused. If the short-circuit current in the loop is small, the fuse cannot be made to be fused quickly, and the conductor in the loop is subjected to a current exceeding a current-carrying capacity, which may result in a danger to the power battery. Thus, there is a low sensitivity to short-circuit fault protection.

A control system for a power battery including a battery pack and a bus bar is provided. The control system includes a switch circuit, connected between the battery pack and the bus bar and configured to obtain and output a temperature of the switch circuit; a sampling circuit, connected between the battery pack and the bus bar and configured to sample a current of the battery pack; and a control circuit, connected to the switch circuit and the sampling circuit and configured to determine a state of the power battery and control performing a corresponding operation according to the state of the power battery.

In some embodiments, the state of the power battery includes a short-circuit state, an overload state, and a normal operation state, an operation corresponding to the short-circuit state is controlling the switch circuit to be disconnected, and an operation corresponding to the overload state is adjusting an operation parameter of the power battery to make the power battery be in the normal operation state.

In some embodiments, the switch circuit includes: a relay, connected between the battery pack and the bus bar; and a fuse, connected between the battery pack and the bus bar; the temperature of the switch circuit includes a first temperature of the relay and a second temperature of the fuse; and the control circuit determines a current state of the power battery according to the current of the battery pack and the first temperature of the relay and/or the second temperature of the fuse.

In some embodiments, the control circuit determines the current state of the power battery to be the overload state, in response to the current of the battery pack exceeding a preset current threshold and the first temperature of the relay exceeding a first preset threshold within a first preset time and/or the second temperature of the fuse exceeding a second preset threshold within a second preset time.

In some embodiments, the control circuit determines the current state of the power battery to be the short-circuit state, in response to the current of the battery pack being less than a first preset current threshold and greater than a second preset current threshold, and the first temperature of the relay being greater than a first preset temperature threshold and/or the second temperature of the fuse being greater than a second preset temperature threshold; wherein the first preset current threshold is greater than the second preset current threshold.

In some embodiments, the control circuit determines the current state of the power battery to be the short-circuit state, in response to the current of the battery pack being less than the first preset current threshold and greater than the second preset current threshold, and the first temperature of the relay having a temperature rise rate greater than a first temperature rise rate threshold within a first preset time and/or the second temperature of the relay having a temperature rise rate greater than a second temperature rise rate threshold within a second preset time.

In some embodiments, the control circuit determines the current state of the power battery to be the short-circuit state, in response to the current of the battery pack being less than the first preset current threshold and greater than the second preset current threshold, and the first temperature of the relay having a temperature value exceeding a first temperature threshold and/or the second temperature of the relay having a temperature value exceeding a second temperature threshold.

In some embodiments, the sampling circuit samples a first current of the battery pack; the control circuit determines a current state of the power battery to be the overload state according to the temperature of the switch circuit and the first current of the battery pack, and controls adjusting an operation parameter of the power battery to make the power battery be in the normal operation state; the sampling circuit samples a second current of the battery pack within a third preset time after the control circuit controls adjusting the operation parameter of the power battery; and the control circuit further obtains the second current of the battery pack, and determines the current state of the power battery to become the short-circuit state in response to the second current being greater than or equal to the first current.

In some embodiments, the adjusting the operation parameter of the power battery includes: reducing an output power of the power battery.

In some embodiments, the switch circuit includes: a relay connected between the battery pack and the bus bar; a first temperature sensor, connected to the relay and configured to obtain the first temperature of the relay; and a relay control sub-circuit, connected to the first temperature sensor; and the control circuit includes: a battery management circuit, connected to the relay control sub-circuit and configured to issue a first control instruction in response to the first temperature and the current of the battery pack, such that the relay control sub-circuit controls the relay to be disconnected in response to the first control instruction such that the switch circuit is controlled to be disconnected; and a vehicle controller, connected to the relay control sub-circuit and configured to issue the second control instruction in response to the first control instruction being not issued or being not responded by the relay control sub-circuit such that the relay control sub-circuit controls the relay to be disconnected in response to the second control instruction such that the switch circuit is controlled to be disconnected.

In some embodiments, the battery management circuit is connected to the relay control sub-circuit through a power supply line to transmit the first control instruction, and the vehicle controller is connected to the relay control sub-circuit through a communication line to transmit the second control instruction. Alternatively, the first temperature sensor is integrated in the relay control sub-circuit.

In some embodiments, the sampling circuit includes: a conductor portion, connected between the battery pack and the bus bar and configured to conduct currents; a third temperature sensor, disposed on a surface of the conductor portion, and configured to obtain a temperature of the conductor portion as a third temperature of the sampling circuit; and a processor, connected to the third temperature sensor and the control circuit, disposed on the surface of the conductor portion, and configured to obtain the third temperature and the current of the battery pack and correct the current of the battery pack based on the third temperature.

In some embodiments, the surface of the conductor portion includes a first surface and a second surface; wherein the third temperature sensor is disposed on the first surface of the conductor portion, the processor is disposed on the second surface of the conductor portion, and the first surface is adjacent to the second surface.

In some embodiments, the switch circuit includes: a fuse, connected between the battery pack and the bus bar and configured to be fused in response to the current of the battery pack being greater than a first preset current threshold; a second temperature sensor, connected to the fuse, disposed on a housing of the fuse, and configured to obtain a second temperature of the fuse.

A power battery is also provided which includes: a battery pack; a bus bar; and the control system in the above, connected between the battery pack and the bus bar.

A control method for a power battery is also provided. The power battery includes a battery pack, a bus bar, and the control system in the above, connected between the battery pack and the bus bar; the control method including: obtaining, by the control circuit, a temperature of the switch circuit and a current of the battery pack sampled by the sampling circuit; and determining, by the control circuit, a state of the power battery and control performing a corresponding operation according to the state of the power battery.

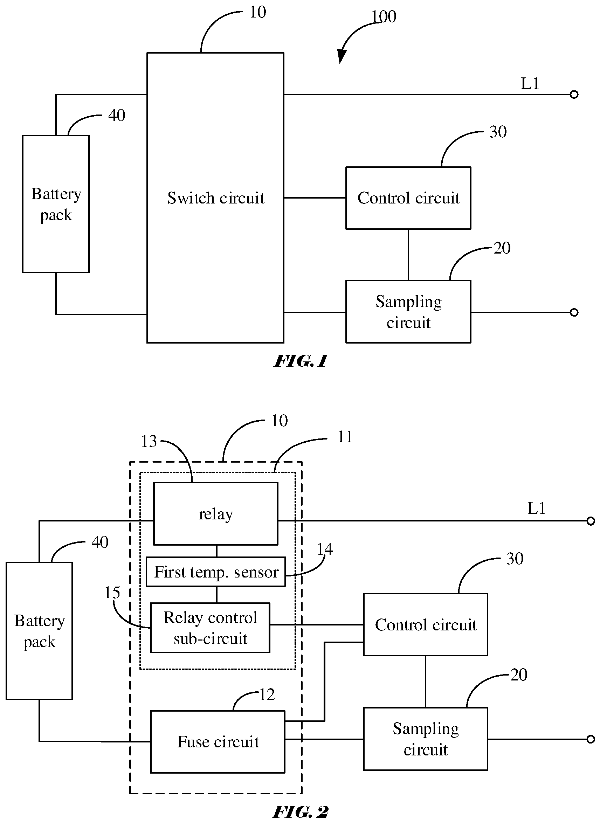

FIG. 1 is a schematic diagram of a control system for a power battery according to some embodiments of the present disclosure. Referring to FIG. 1, the control system 100 for the power battery in the embodiments of the present disclosure includes a switch circuit 10, a sampling circuit 20, and a control circuit 30. The switch circuit 10 is connected between a battery pack 40 and a bus bar L1. The switch circuit 10 is used to obtain and output a temperature of itself. The sampling circuit 20 is connected between the switch circuit 10 and the bus bar L1. The sampling circuit 20 is used to acquire a current of the power battery. The control circuit 30 is connected to the switch circuit 10 and the sampling circuit 20. The control circuit 30 is used to determine whether the power battery is short-circuited based on the temperature and the current and issue a control instruction to the switch circuit 10 based on a determining result. The switch circuit 10 is used to be disconnected in response to the control instruction when the power battery is short-circuited.

Specifically, the battery pack 40 of the power battery is connected to the busbar L1 through the switch circuit 10 and the sampling circuit 20. When the battery pack 40 is running or operating, a current passing through the busbar L1 will generate heat on the switch circuit 10, and the switch circuit 10 may obtain the temperature generated when the current passes through the switch circuit 10. The sampling circuit 20 may sample the current of battery pack 40 passing through bus bar L1. The current of battery pack 40 may represent the current of the power battery. The control circuit 30 may obtain the temperature of the switch circuit 10 and the current sampled by the sampling circuit 20, and determine whether the power battery is short-circuited based on the temperature and the current. When the control circuit 30 detects that the temperature of the switch circuit 10 has a temperature rise rate exceeding a temperature rise rate threshold in a preset time or a temperature value exceeding a preset temperature threshold, the control circuit 30 obtains the current sampled by the sampling circuit 20 synchronously. If the current is greater than a second preset current threshold and is less than a first preset current threshold, the power battery may be considered to be short-circuited. The fuse of the power battery may not be triggered or fused because of a small short-circuit current. At this time, the control circuit 30 issues a control instruction to control the switch circuit 10, and the switch circuit 10 becomes being disconnected in response to the control instruction to protect the power battery.

Exemplarily, when the power battery is running or operating, the switch circuit 10 can obtain the temperature generated when the current passes through the switch circuit 10. The sampling circuit 20 may sample the current of battery pack 40 passing through bus bar L1. The control circuit 30 may obtain the temperature of the switch circuit 10 and the current sampled by the sampling circuit 20. When the control circuit 30 detects the temperature of the switch circuit 10 has a temperature rise rate exceeding the temperature rise rate threshold in the preset time or a temperature value exceeding the preset temperature threshold, the control circuit 30 obtains the current sampled by the sampling circuit 20 synchronously. If the current is greater than the second preset current threshold and is less than the first preset current threshold, the control circuit 30 determines that the power battery is short-circuited and issues a control instruction to control the switch circuit 10. The switch circuit 10 becomes being disconnected in response to the control instruction to protect the power battery.

In the control system for the power battery provided by embodiments of the present disclosure, the control circuit obtains the temperature of the switch circuit and the current sampled by the sampling circuit to determine whether the power battery is short-circuited. When the power battery is short-circuited, the control circuit issues a control instruction to control the switch circuit to be disconnected to protect the power battery. The control system of the power battery of the present disclosure realizes improvement of the accuracy of determining the short-circuit fault of the power battery, and is able to handle the short-circuit fault in a timely manner.

In some embodiments, FIG. 2 is a schematic diagram of another control system of a power battery according to some embodiments of the present disclosure. As shown in FIG. 2, the switch circuit 10 comprises a relay circuit 11 and a fuse circuit 12. The relay circuit 11 is connected between the battery pack 40 and the bus bar L1, and the relay circuit 11 is used to obtain a first temperature of the relay circuit 11 and to be disconnected in response to a control instruction when the power battery is short-circuited. The fuse circuit 12 is connected between the battery pack 40 and the bus bar L1, and the fuse circuit 12 is used to obtain second temperature of the fuse circuit 12 and to be fused when the current of the power battery is greater than a first preset current threshold. The control circuit 30 is connected to the relay circuit 11 and the fuse circuit 12, and the control circuit 30 is used to determine whether the power battery is short-circuited based on the first temperature and/or the second temperature and the current, and to issue a control instruction to the relay circuit 11 based on a determining result.

The control circuit 30 is used to determine that the power battery is in a short-circuit state, and issue a control instruction when the current of the power battery is greater than a second preset current threshold and less than a first preset current threshold, and the first temperature is greater than a first preset temperature threshold and/or the second temperature is greater than a second preset temperature threshold. The first preset current threshold is greater than the second preset current threshold.

In some embodiments, the first preset temperature threshold includes a first temperature rise rate threshold and a first temperature threshold. The first temperature being greater than the first preset temperature threshold includes that a temperature rise rate of the first temperature is greater than the first temperature rise rate threshold in a first preset time or a temperature value of the first temperature exceeds the first temperature threshold.

In some embodiments, the second preset temperature threshold includes a second temperature rise rate threshold and a second temperature threshold. The second temperature being greater than the second preset temperature threshold includes that a temperature rise rate of the second temperature is greater than the second temperature rise rate threshold in a second preset time or a temperature value of the second temperature exceeds the second temperature threshold.

The first preset temperature threshold and the second preset temperature threshold are a temperature threshold of the relay and a temperature threshold of a fuse, respectively, which are the same or different.

Specifically, the switch circuit 10 includes a relay circuit 11 and a fuse circuit 12. The relay circuit 11 may obtain the first temperature of heat generated when the current passes through the relay circuit 11, and the relay circuit 11 may also control on-off of the loop of the power battery according to the control instruction. The fuse circuit 12 obtains the second temperature of the heat generated when the current passes through the fuse circuit 12, and when the current of the power battery is greater than the first preset current threshold, the fuse circuit 12 may be fused to protect the power battery. The first preset current threshold is a current value at which the fuse circuit 12 may be fused.

The control circuit 30 may determine a short-circuit condition of the power battery according to the obtained first temperature and second temperature. When the control circuit 30 detects that the first temperature has risen rapidly within the first preset time or exceeded the first preset temperature threshold and/or the second temperature has risen rapidly within the second preset time or exceeded the second preset temperature threshold, and the fuse circuit 12 is not fused (which means that the current of the power battery is less than the first preset current threshold), the control circuit 30 obtains the current sampled by the sampling circuit 20. If the current is greater than the second preset current threshold and less than the first preset current threshold, it may be determined that the power battery has suffered a short-circuit fault. At this time, the control circuit 30 sends a control instruction to control the relay circuit 11 to be disconnected in order to protect the power battery. Such a setting makes the power battery have two ways of protection in the event of a short-circuit fault: passive disconnection through the fuse circuit and active disconnection through the relay circuit, improving the protection of the power battery.

In some embodiments, as shown in FIG. 2 again, the relay circuit 11 includes a relay 13, a first temperature sensor 14, and a relay control sub-circuit 15. The relay 13 is connected between the battery pack 40 and the bus bar L1. The relay 13 is used to be disconnected when the power battery is short-circuited. The first temperature sensor 14 is connected to the relay 13. The first temperature sensor 14 is used to obtain the first temperature of the relay 13. The relay control sub-circuit 15 is connected to the first temperature sensor 14 and the control circuit 30 respectively. The relay control sub-circuit 15 is used to output the first temperature to the control circuit 30 and control an on-off state of the relay 13 based on the control instruction.

Specifically, the relay 13 is connected to the battery pack 40 and the bus bar L1, and the current of the bus bar L1 passes through the relay 13 and generates heat. The first temperature sensor 14 may obtain and output the first temperature of the relay 13 to the relay control sub-circuit 15. The control circuit 30 obtains the first temperature through the relay control sub-circuit 15, and determines the short-circuit condition of the power battery according to the first temperature and the current. When the power battery is short-circuited, the control circuit 30 issues a control instruction, and the relay control sub-circuit 15 acquires the control instruction and controls the relay 13 to be disconnected to protect the power battery. This setting can determine whether the power battery is short-circuited according to the temperature of the relay, further improving the safety of the power battery.

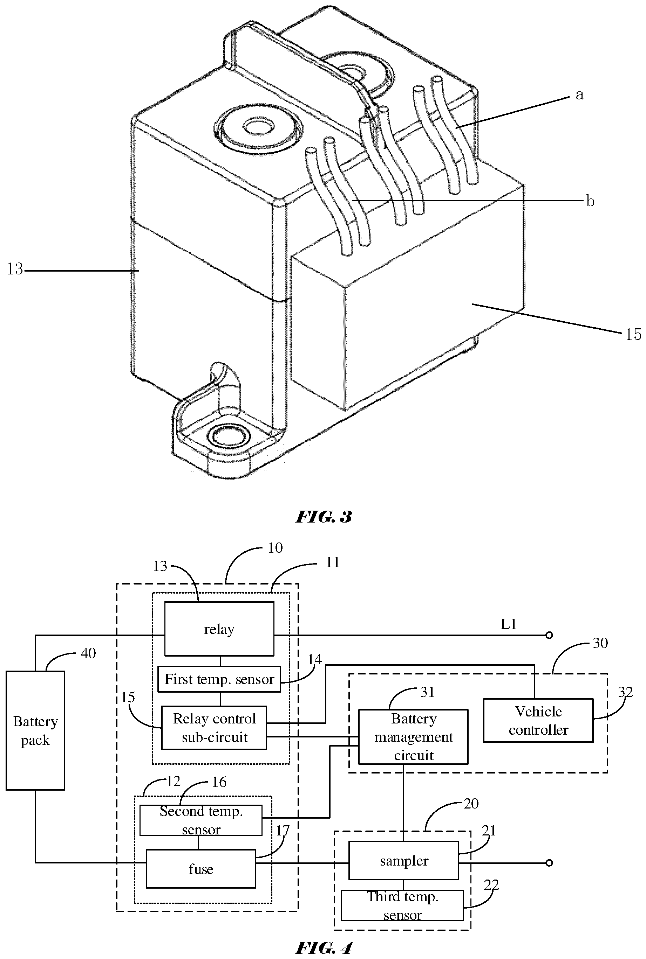

In some embodiments, FIG. 3 is a schematic diagram of a relay circuit according to some embodiments of the present disclosure. Combining FIGS. 2 and 3, the first temperature sensor 14 is integrated in the relay control sub-circuit 15, and the relay circuit 11 further includes a power supply line a and a communication line b. The power supply line a is connected between the relay control sub-circuit 15 and the control circuit 30, and the power supply line a is used to transmit the control instruction by means of an electrical signal. The communication line b is connected between the relay control sub-circuit 15 and the control circuit 30. and the communication line b is used to transmit the control instruction by means of a digital signal.

Specifically, the first temperature sensor 14 is integrated in the relay control sub-circuit 15. The power supply line a and the communication line b are disposed on the relay control sub-circuit 15 in the relay circuit 11, and the relay control sub-circuit 15 is connected to the control circuit 30 via the power supply line a and the communication line b. When the power battery is short-circuited, a control instruction from the control circuit 30 may control the relay control sub-circuit 15 in the form of an electrical signal via the power line a when the power battery is short-circuited, and control the relay control sub-circuit 15 in the form of a digital signal via the communication line b. Exemplarily, the communication line b may be a CAN bus, and the issued control instruction may be a CAN instruction. This setup can improve the control effect on the relay, improve control reliability of the relay, and thus improve the safety of the power battery.

In some embodiments, FIG. 4 is a schematic diagram of yet another control system for a power battery according to some embodiments of the present disclosure. As shown in FIG. 4, the control circuit 30 includes a battery management circuit 31 and a vehicle controller 32. The battery management circuit 31 is connected to the relay control sub-circuit 15, the sampling circuit 20, and the fuse circuit 12, wherein the relay control sub-circuit 15 is connected to the battery management circuit 31 through the power supply line a. The battery management circuit 31 is used to determine whether the power battery is short-circuited according to the first temperature and/or the second temperature and the current, and to issue a first control instruction to the relay 13 based on a determining result. The vehicle controller 32 is connected to the relay control sub-circuit 15, in other words, the relay control sub-circuit 15 is connected to the vehicle controller 32 through the communication line b. The vehicle controller 32 is used to issue a second control instruction when the relay control sub-circuit 15 does not respond the first control instruction. The control instruction includes the first control instruction and the second control instruction.

Specifically, the control circuit 30 includes the battery management circuit 31 and the vehicle controller 32, and the battery management circuit 31 is connected to the relay control sub-circuit 15, the sampling circuit 20, and the fuse circuit 12, and obtains the first temperature, the second temperature, and the current to determine whether the power battery is short-circuited, and when the power battery is short-circuited, a first control instruction is issued to control the relay control sub-circuit 15 and then control the relay 13 to be disconnected. If the battery management circuit 31 fails to issue the first control instruction or the relay control sub-circuit 15 does not respond to the first control instruction, the vehicle controller 32 connected to the relay control sub-circuit 15 will issue the second control instruction through the communication line to control the relay 13 to be disconnected. Such a setting can further improve the control reliability of the relay and thus improve the safety of the power battery.

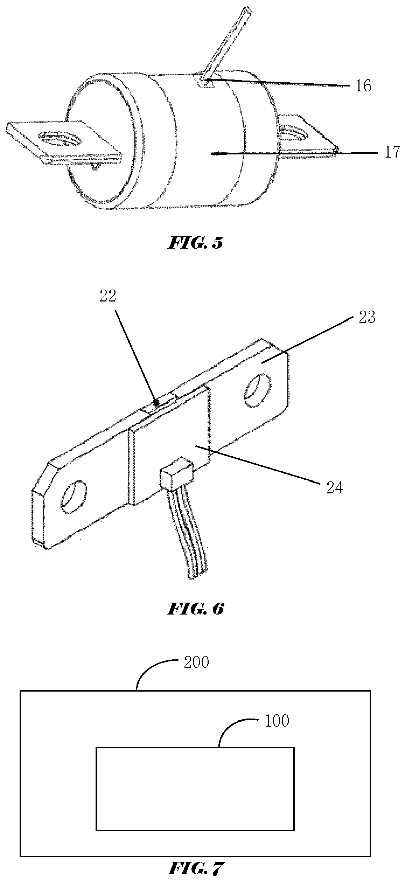

In some embodiments, FIG. 5 is a schematic diagram of a fuse circuit according to some embodiments of the present disclosure. In combination with FIGS. 4 and 5, the fuse circuit 12 includes a second temperature sensor 16 and a fuse 17. The fuse 17 is connected between the battery pack 40 and the bus bar L1, and the fuse 17 is used to be fused when the current of the power battery is greater than the first preset current threshold. The second temperature sensor 16 is connected between the fuse 17 and the control circuit 30, the second temperature sensor 16 is disposed in a housing of the fuse 17, and the second temperature sensor 16 is used to obtain the second temperature of the fuse 17.

Specifically, the fuse circuit 12 includes the fuse 17 and the second temperature sensor 16 disposed on the housing of the fuse 17. The current on the bus bar L1 passing through the fuse 17 generates heat, and when the current of the power battery is greater than the first preset current threshold, the fuse 17 may be fused to protect the power battery. The second temperature sensor 16 may obtain the second temperature of the fuse 17. The control circuit 30 obtains the second temperature through the second temperature sensor 16, and determines the short-circuit condition of the power battery based on the second temperature and the current. When the power battery is short-circuited, the control circuit 30 issues a control instruction to control the relay 13 to be disconnected, realizing the protection of the power battery. This setting can determine whether the power battery is short-circuited according to the temperature of the fuse, preventing the power battery from being damaged by the short-circuit current due to the slow fusing of the fuse, and further improving the safety of the power battery.

In some embodiments, Continuing to refer to FIG. 4, the sampling circuit 20 includes a sampler 21 and a third temperature sensor 22. The sampler 21 is connected between the switch circuit 10 and the bus bar L1, and is connected to the control circuit 30. The sampler 21 is used to obtain the current of the power battery, and to correct the current according to the third temperature. The third temperature sensor 22 is connected to the sampler 21, and the third temperature sensor 22 is used to obtain a third temperature of the sampler 21.

Specifically, the sampling circuit 20 includes the sampler 21 and the third temperature sensor 22, and the sampler 21 may acquire current of the battery pack 40 passing through the bus bar L1, i.e., current of the power battery. The third temperature sensor 22 may acquire the third temperature of the heat generated when the current passes through the sampling circuit 20, and the sampler 21 may correct the sampled current according to the third temperature to further improve the accuracy of the current, and thus improve the accuracy of the control circuit in determining whether the power battery is short-circuited.

In some embodiments, FIG. 6 is a schematic diagram of a sampling circuit according to some embodiments of the present disclosure. In conjunction with FIGS. 4 and 6, the sampler 21 includes a conductor portion 23 and a processor 24. The conductor portion 23 is connected between the switch circuit 10 and the bus bar L1, and the third temperature sensor 22 is set on a surface of the conductor portion 23. The conductor portion 23 is used to conduct current to measure the current of the power battery. The processor 24 is connected to the control circuit 30 and is disposed on the surface of the conductor portion 23. The processor 24 is used to acquire the current of the conductor portion 23 and correct the current according to the third temperature. Such a setting can further improve the accuracy of the acquired current and temperature.

Specifically, the sampler 21 is provided with the conductor portion 23 and the processor 24 disposed on the surface of the conductor portion 23, while the third temperature sensor 22 is also disposed on a surface of the conductor portion 23. The conductor portion 23 is connected to the bus bar L1, and the current generated during operation of the battery pack 40 passes through the conductor portion 23 and generates heat. The third temperature sensor 22 acquires the third temperature of the conductor portion 23, and the sampler 21 acquires a voltage of two ends of the conductor portion 23. The current of the power battery is calculated according to a known resistance of the conductor portion 23. The current passing through the conductor portion 23 causes its temperature to change and then causes its resistance value to change. As the third temperature of the conductor portion 23 is obtained, the resistance value of the conductor portion 23 may be corrected and then the current is corrected.

In some embodiments, continuing to refer to FIG. 6, the conductor portion 23 includes a first surface and a second surface. The third temperature sensor 22 is disposed on the first surface of the conductor portion 23, the processor 24 is disposed on the second surface of the conductor portion 23, and the first surface and the second surface are disposed adjacent to each other.

Specifically, the conductor portion 23 includes the first surface and the second surface adjacent to each other. The third temperature sensor 22 is disposed on the first surface, and the processor 24 is disposed on the second surface. The processor 24 is connected to the third temperature sensor 22. The processor 24 and the third temperature sensor 22 are set at adjacent positions, which can improve the accuracy of the obtained current, and thus improve the accuracy of the control circuit in determining whether the power battery is short-circuited.

Alternatively, an area of the first surface may be set to be less than an area of the second surface. The third temperature sensor 22, which has a small size, may be set on the first surface having a small area, and the processor 24, which has a large size, may be set on the second surface having a large area. Thus, the sampling circuit has a small size, which facilitates improving the integration of the control system of the power battery and reducing the size of the control system of the power battery.

Exemplarily, when the power battery is running or operating, the first temperature sensor 14 acquires and output the first temperature of the relay 13 to the relay control sub-circuit 15, and the second temperature sensor 16 acquires the second temperature of the fuse 17. The sampler 21 acquires the current of the battery pack 40 passing through the bus bar L1, and corrects the acquired current according to the third temperature acquired by the third temperature sensor 22. The battery management circuit 31 determines whether the power battery is short-circuited according to the acquired first temperature, second temperature, and current.

When the first temperature rapidly rises within the first preset time and/or the second temperature rapidly rises within the second preset time and exceeds the preset temperature threshold, and the fuse 17 is not fused, and at the same time the current is greater than the second preset current threshold and less than the first preset current threshold, it may be determined that the power battery has suffered a short-circuit fault. At this time, the battery management circuit 31 issues the first control instruction to the relay control sub-circuit 15 to control the relay 13 to be disconnected.

If the battery management circuit 31 fails to issue the first control instruction or the relay control sub-circuit 15 does not respond to the first control instruction, the vehicle controller 32 connected to the relay control sub-circuit 15 issues the second control instruction via the communication line to control the relay 13 to be disconnected. The control system for the power battery in the present embodiments realizes improving accuracy in determining a short-circuit fault of the power battery, and is able to handle the short-circuit fault in a timely manner, improving the safety of the power battery.

In some embodiments, FIG. 7 is a schematic diagram of a power battery according to some embodiments of the present disclosure. Referring to FIG. 7, the power battery 200 in embodiments of the present disclosure includes a control system 100 of the power battery of any of the above embodiments, and has the beneficial effect of the control system 100 of the power battery of any of the above embodiments, which will not be repeated herein.

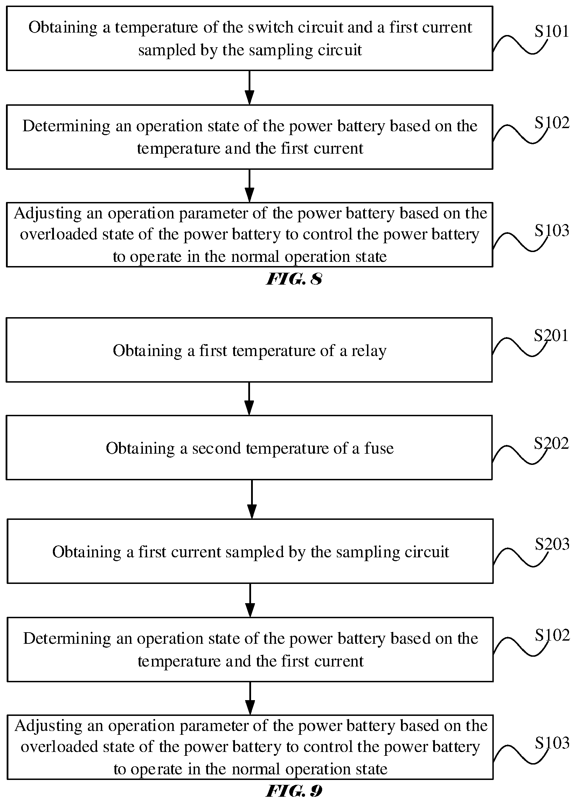

FIG. 8 is a flow chart of a control method for a power battery according to some embodiments of the present disclosure. The power battery includes a battery pack, a bus bar, and a control system, for example, the control system 100 in the any of the above embodiments or a combination of the above embodiments. As shown in FIG. 8, the control method includes the following operations/actions.

At block S101, the method obtains a temperature of the switch circuit and a first current sampled by the sampling circuit.

Specifically, the switch circuit of the power battery may control an operation state of a loop of the power battery. When the switch circuit is off, the power battery stops operating, and when the switch circuit is on, the power battery operates. During the operation of the power battery, a current passing through the switch circuit will generate heat. As the temperature of the switch circuit and the first current of the power battery sampled by the sampling circuit are obtained, the operation state of the power battery may be determined.

At block S102, the method determines an operation state of the power battery based on the temperature and the first current.

The operation state includes a normal operation state and an overload state.

Specifically, the operation state of the power battery may be determined according to the temperature of the switch circuit and the first current sampled by the sampling circuit. When the temperature of the switch circuit exceeds a safe temperature threshold and the first current sampled by the sampling circuit exceeds a safe current threshold, it may be determined that the power battery is in the overload state. Thus, the state of the power battery may be determined according to the temperature and current of the power battery, improving accuracy.

At block S103, the method adjusts an operation parameter of the power battery based on the overload state of the power battery to control the power battery to operate in the normal operation state.

Specifically, when the power battery is in the overload state, a current inside the power battery is greater than the safe current threshold, and the temperature rises above the safe temperature threshold. If the power battery continues to operate, it will cause a safety failure. At this time, it is necessary to adjust the operating parameter of the power battery, for example reducing an operating power, so that the current output from the power battery decreases, the temperature gradually decreases, and the power battery returns to the normal operating state. Thus, this setting can maintain the normal operation of the power battery and improve the safety of the power battery.

Exemplarily, when the power battery is operating, the temperature of the switch circuit and the first current sampled by the sampling circuit are acquired. When the temperature of the switch circuit exceeds the safe temperature threshold and the first current sampled by the sampling circuit exceeds the safe current threshold, it may be determined that the power battery is in the overload state. At this time, it is necessary to adjust the operation parameter of the power battery, such as reducing the operation power, so that the current of the power battery decreases, and the temperature gradually decreases, and thus, the power battery returns to the normal operation state.

In the battery control method in this embodiment, as the temperature of the switch circuit and the first current sampled by the sampling circuit are obtained, the operation state of the power battery is determined. When the power battery is in the overload state, the operation parameter of the power battery is adjusted to control the power battery to operate in the normal operation state. Such a setting realizes maintaining the power battery being in the normal operation and improves safety of the power battery.

In some embodiments, FIG. 9 is a flow chart of another control method for a power battery according to some embodiments of the present disclosure. As shown in FIG. 9, the control method according to embodiments of the present disclosure includes the following operations/actions.

At block S201, the method obtains a first temperature of a relay.

Specifically, the switch circuit includes a relay and a fuse, and the relay is used to control on-off of the loop of the power battery. The first temperature may be generated when the current of the power battery passes through the relay, and the first temperature may be used to determine the operation state of the power battery.

At block S202, the method obtains a second temperature of a fuse.

The switch circuit includes a relay and a fuse, which has been descripted in the above embodiments and not descripted herein.

Specifically, the fuse is used to be fused when the current of the power battery exceeds a preset threshold to protect the power battery. For example, the fuse 17 is used to be fused when the current of the power battery exceeds the first preset current threshold to protect the power battery. The second temperature may be generated when the current of the power battery passes through the fuse, and the second temperature may be used to determine the operation state of the power battery.

At block S203, the method obtains a first current sampled by the sampling circuit.

Specifically, the sampling circuit is provided with a conductor portion, and the sampling circuit may sample a voltage of the conductor portion and calculate the first current when the power battery operates according to a known resistance of the conductor. The first current may be used to determine the operation state of the power battery. Such a setup can determine the state of the power battery with multiple parameters to further improve the accuracy.

At block S102, the method determines the operation state of the power battery based on the temperature and the first current; wherein the operation state includes a normal operation state and an overload state, and the temperature includes a first temperature of the relay and a second temperature of the fuse.

At block S103, the method adjusts an operation parameter of the power battery based on the overload state of the power battery to control the power battery to operate in the normal operation state.

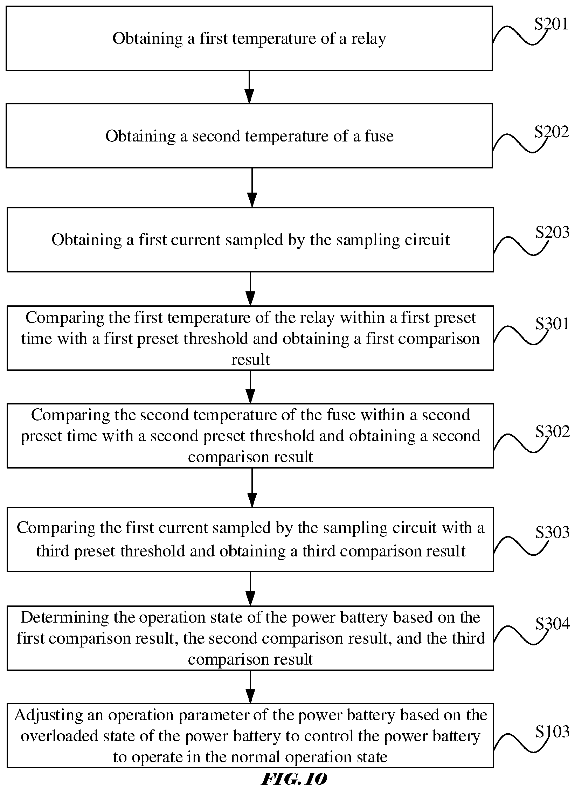

In some embodiments, FIG. 10 is a flow chart of yet another control method for a power battery according to some embodiments of the present disclosure. As shown in FIG. 10, the control method in the embodiments of the present disclosure includes the following operations/actions.

At block S201, the method obtains a first temperature of a relay.

At block S202, the method obtains a second temperature of a fuse.

At block S203, the method obtains a first current sampled by the sampling circuit.

At block S301, the method compares the first temperature of the relay in a first preset time with a first preset threshold and obtains a first comparison result.

Specifically, when the power battery operates normally, the first temperature of the relay is less than the first preset threshold. When the first temperature exceeds the first preset threshold, the power battery may be in the overload state.

In some embodiments, the first temperature of the relay within the first preset time is compared with the first preset threshold value, and the operation state of the power battery may be determined based on the first comparison result.

At block S302: the method compares the second temperature of the fuse within a second preset time with a second preset threshold and obtains a second comparison result.

Specifically, when the power battery operates normally, the second temperature of the fuse is less than the second preset threshold. When the second temperature exceeds the second preset threshold, the power battery may be in the overload state.

In some embodiments, the second temperature of the fuse within the second preset time is compared with the second preset threshold, and the operation state of the power battery may be determined based on the second comparison result.

In these embodiments, the switch circuit includes a relay and a fuse, and the safe temperature threshold includes the first preset threshold and the second preset threshold.

It is to be noted that the first preset time may be the same as or different from the second preset time, and the first preset threshold may be the same as or different from the second preset threshold, which are not limited herein.

It is to be noted that the first preset temperature threshold and the second preset temperature threshold are used to determine whether the power battery is in the short-circuit state. The first preset threshold and the second preset threshold are used to determine whether the power battery is in the overload state. In some embodiments, the first preset temperature threshold is greater than the first preset threshold, and the second preset temperature threshold is greater than the second preset threshold.

At block S303, the method compares the first current sampled by the sampling circuit with a third preset threshold and obtains a third comparison result.

Specifically, when the power battery operates normally, the first current of the power battery sampled by the sampling circuit is within the third preset threshold. When the first current exceeds the third preset threshold, the power battery may be in the overload state. The first current is compared with the third preset threshold, and the operation state of the power battery may be determined based on the third comparison result.

At block S304, the method determines the operation state of the power battery based on the first comparison result, the second comparison result, and the third comparison result.

Specifically, it may be determined that whether the temperature of the relay is rapidly increasing within the first preset time and exceeds the first preset threshold or not, based on the first comparison result. It may be determined that whether the temperature of the fuse is rapidly increasing within a second preset time and exceeds the second preset threshold value or not, based on the second comparison result. It may be determined that whether the current of the power battery exceeds the third preset threshold or not, based on the third comparison result. The operation state of the power battery may be determined based on change in temperature of the relay, change in the temperature of the fuse, and the change in the current of the power battery.

At block S103, the method adjusts an operation parameter of the power battery based on the overload state of the power battery to control the power battery to operate in the normal operation state.

It is noted that, the preset current threshold is used to determine whether the power battery is in the overload state. The first preset current threshold and the second preset current threshold are used to determine whether the power battery is in the short-circuit state.

In some embodiments, the preset current threshold, the safe current threshold and the third preset threshold are the same.

In some embodiments, the first preset current threshold is greater than the second preset current threshold, and the second preset current threshold is greater than the preset current threshold.

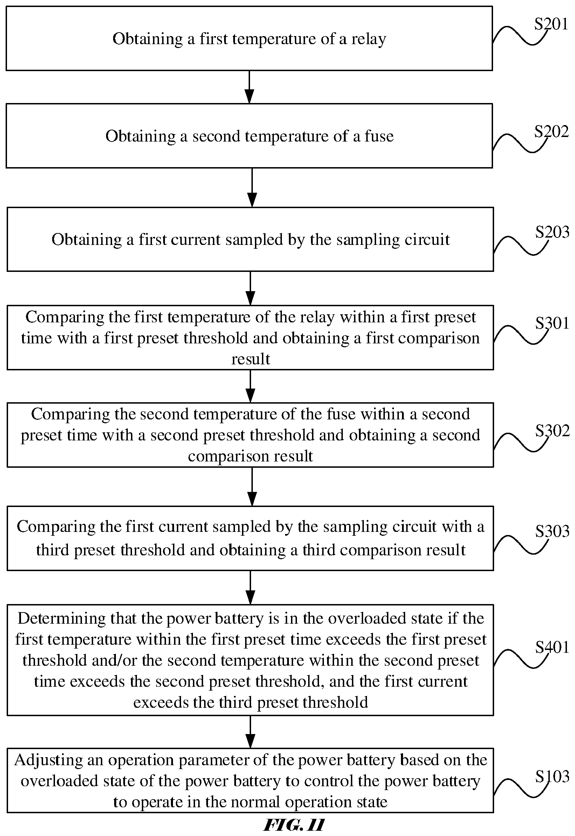

In some embodiments, FIG. 11 is a flow chart of yet another control method for a power battery according to some embodiments of the present disclosure. As shown in FIG. 11, the control method in the embodiments of the present disclosure includes the following operations/actions.

At block S201, the method obtains a first temperature of a relay.

At block S202, the method obtains a second temperature of a fuse.

At block S203, the method obtains a first current sampled by the sampling circuit.

At block S301, the method compares the first temperature of the relay in a first preset time with a first preset threshold and obtains a first comparison result.

At block S302: the method compares the second temperature of the fuse within a second preset time with a second preset threshold and obtains a second comparison result.

At block S303, the method compares the first current sampled by the sampling circuit with a third preset threshold and obtains a third comparison result.

At block S401, the method determines that the power battery is in the overload state if the first temperature within the first preset time exceeds the first preset threshold and/or the second temperature within the second preset time exceeds the second preset threshold, and the first current exceeds the third preset threshold.

Specifically, when the first temperature of the relay in the first preset time exceeds the first preset threshold and/or the second temperature of the fuse in the second preset time exceeds the second preset threshold, and the first current sampled by the sampling circuit exceeds the third preset threshold, it may be assumed that the power battery is in the overload state, and its operation parameters need to be adjusted. With this setting, the operating state of the power battery may be determined with multiple criteria for timely processing, thus improving safety of the power battery.

At S103: the method adjusts an operation parameter of the power battery based on the overload state of the power battery to control the power battery to operate in the normal operation state.

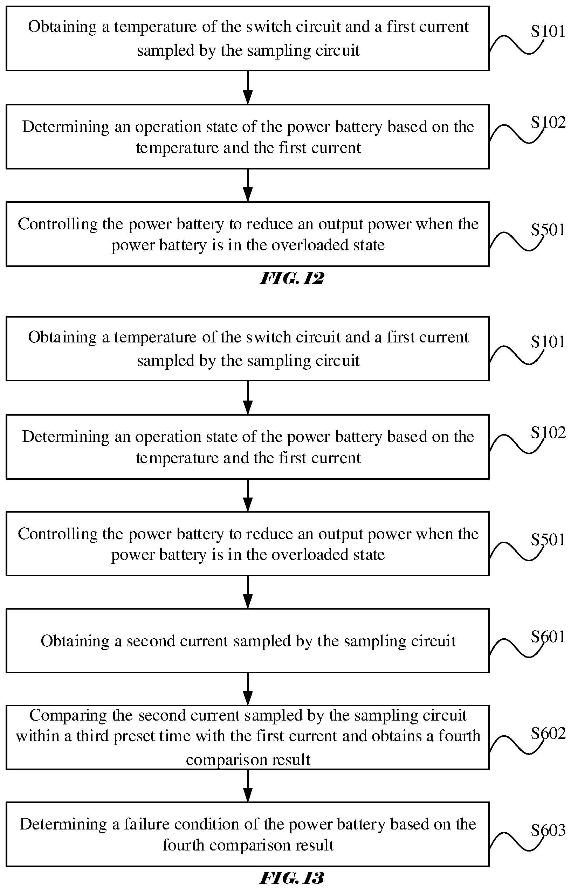

In some embodiments, FIG. 12 is a flow chart of yet another control method for a power battery according to some embodiments of the present disclosure. As shown in FIG. 12, the control method in the embodiments of the present disclosure includes the following operations/actions.

At block S101, the method obtains a temperature of the switch circuit and a first current sampled by the sampling circuit.

At block S102, the method determines the operation state of the power battery based on the temperature and the first current; wherein the operation state includes a normal operation state and an overload state.

At block S501, the method controls the power battery to reduce an output power when the power battery is in the overload state.

Specifically, when the power battery is in the overload state, an internal component of the power battery is subjected to a current exceeding the current-carrying capacity, resulting in a gradual increase in temperature, and being in the overload state for a long period will lead to safety accidents in the power battery. At this time, it is necessary to reduce the output power of the power battery to reduce the current inside the power battery, so as to protect the power battery. This setting can extend the service life of the power battery and save costs.

In some embodiments, FIG. 13 is a flow chart of yet another control method for a power battery according to some embodiments of the present disclosure. As shown in FIG. 13, the control method in the embodiments of the present disclosure includes the following operations/actions.

At block S101, the method obtains a temperature of the switch circuit and a first current sampled by the sampling circuit.

At block S102, the method determines an operation state of the power battery based on the temperature and the first current; wherein the operation state includes a normal operation state and an overload state.

At block S501, the method controls the power battery to reduce an output power when the power battery is in the overload state.

At block S601, the method obtains a second current sampled by the sampling circuit.

Specifically, after the output power of the power battery is reduced, the second current of the power battery sampled by the sampling circuit may be obtained again to confirm a size of the current of the power battery.

At block S602, the method compares the second current sampled by the sampling circuit within a third preset time with the first current and obtains a fourth comparison result.

Specifically, after the output power of the power battery has been reduced for the third preset time, the second current sampled by the sampling circuit is compared with the first current, and it may be determined that whether the current of the power battery has been reduced or not based on the comparison result, so as to determine whether a failure of the power battery occurs or not.

At block S603, the method determines a failure condition of the power battery based on the fourth comparison result.

Specifically, when the second current is less than the first current, it may be confirmed that the power battery's output power is reduced. When the second current is greater than or equal to the first current, the output power of the power battery is not reduced. Then it is necessary to confirm whether the power battery fails, so that the power battery can be processed accordingly. This setting can further improve safety of the power battery.

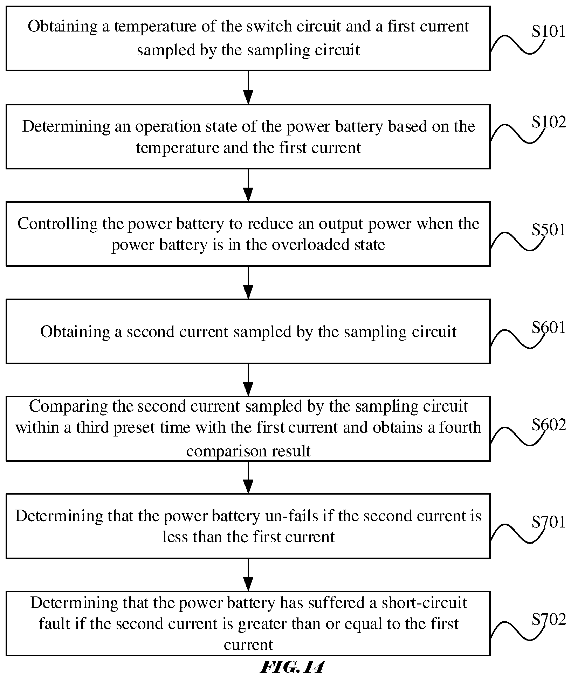

In some embodiments, FIG. 14 is a flow chart of yet another control method for a power battery according to some embodiments of the present disclosure. As shown in FIG. 14, the control method in the embodiments of the present disclosure includes the following operations/actions.

At block S101, the method obtains a temperature of the switch circuit and a first current sampled by the sampling circuit.

At block S102, the method determines an operation state of the power battery based on the temperature and the first current; wherein the operation state includes a normal operation state and an overload state.

At block S501, the method controls the power battery to reduce an output power when the power battery is in the overload state.

At block S601, the method obtains a second current sampled by the sampling circuit.

At block S602, the method compares the second current sampled by the sampling circuit within a third preset time with the first current and obtains a fourth comparison result.

At block S701, the method determines that the power battery un-fails if the second current is less than the first current.

Specifically, if the second current is less than the first current, it means that the current of the power battery decreases and the power battery operates normally after the output power is reduced. At this time, the power battery is not failed.

At block S702, the method determines that the power battery has suffered a short-circuit fault if the second current is greater than or equal to the first current.

Specifically, if the second current is greater than or equal to the first current, it means that although the power battery is operated to reduce the output power, the current of the power battery is not reduced actually, and it may be assumed that the power battery has suffered an external short-circuit fault. That is, the power battery further has a short-circuit state, besides of the overload state and the normal operation state.

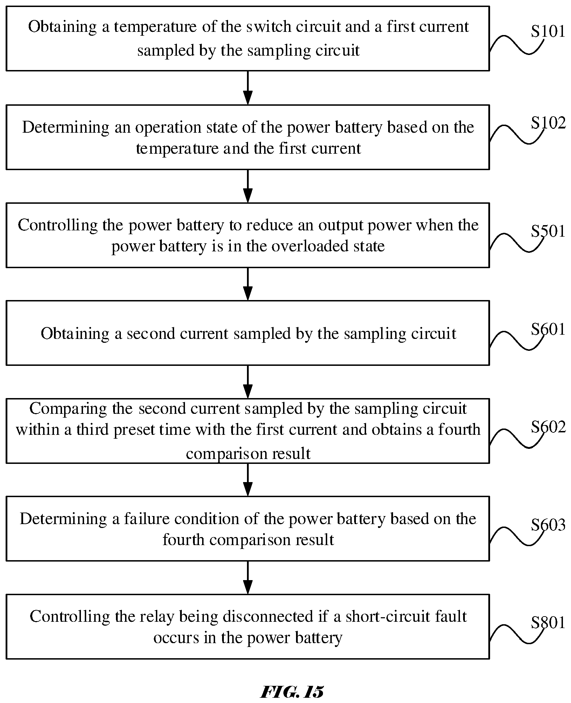

In some embodiments, FIG. 15 is a flow chart of yet another control method for a power battery according to some embodiments of the present disclosure. As shown in FIG. 15, the battery control method in the embodiments of the present disclosure includes the following operations/actions.

At block S101, the method obtains a temperature of the switch circuit and a first current sampled by the sampling circuit.

At block S102, the method determines an operation state of the power battery based on the temperature and the first current; wherein the operation state includes a normal operation state and an overload state.

At block S501, the method controls the power battery to reduce an output power when the power battery is in the overload state.

At block S601, the method obtains a second current sampled by the sampling circuit.

At block S602, the method compares the second current sampled by the sampling circuit within a third preset time with the first current and obtains a fourth comparison result.

At block S603, the method determines a failure condition of the power battery based on the fourth comparison result.

At block S801, the method controls the relay being disconnected if a short-circuit fault occurs in the power battery.

Specifically, if a short-circuit fault occurs in the power battery, the relay is required to be disconnected to disconnect the loop of the power battery to protect the power battery. The relay may be disconnected by a battery management circuit, or the relay may be disconnected by a vehicle relay. This setting can further protect the power battery and improve safety.

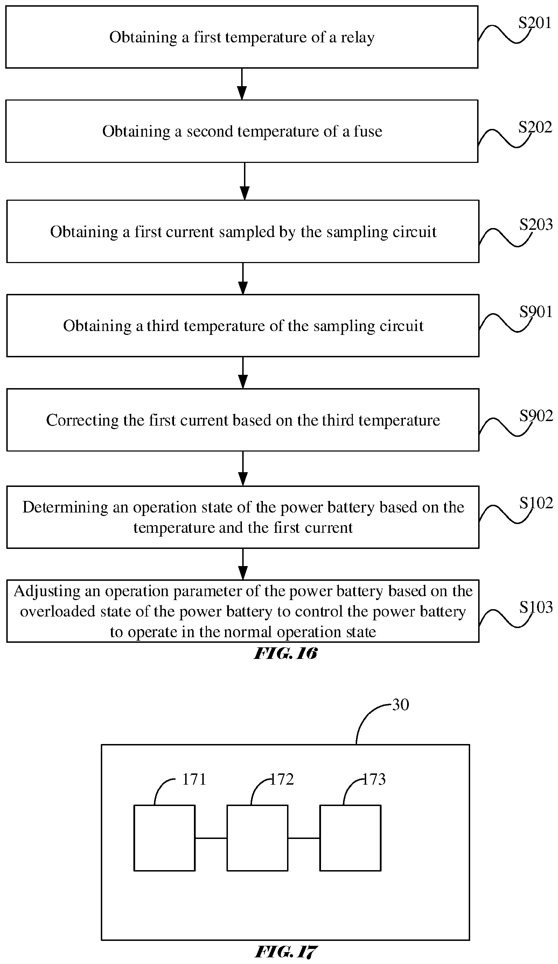

In some embodiments, FIG. 16 is a flow chart of yet another control method for a power battery according to some embodiments of the present disclosure. As shown in FIG. 16, the control method in the embodiments of the present disclosure includes the following operations/actions.

At block S201, the method obtains a first temperature of a relay.

At block S202, the method obtains a second temperature of a fuse.

At block S203, the method obtains a first current sampled by the sampling circuit.

In the embodiments, to ensure the accuracy of the sampled first current, the first current is corrected through the sampling circuit, which is specifically as follow.

At block S901, the method obtains a third temperature of the sampling circuit.

Specifically, the third temperature of the sampling circuit may be obtained to confirm the temperature of the power battery. The third temperature is a temperature generated when the current of the power battery passes through the conductor portion of the sampling circuit. A resistance value of the conductor portion is affected by the temperature of the conductor portion, which in turn affects a size of the current passing through the conductor portion. By obtaining the third temperature, the current sampled by the sampling circuit can be corrected.

At block S902, the method corrects the first current based on the third temperature.

Specifically, according to the third temperature generated when the current of the power battery passes through the conductor portion of the sampling circuit, the resistance value of the conductor portion may be corrected, and then the first current obtained by the sampling circuit may be corrected. Such a setting ensures the accuracy of the sampled current.

At block S102, the method determines an operation state of the power battery based on the temperature and the first current; wherein the operation state includes a normal operation state and an overload state, and the temperature includes a first temperature of the relay and a second temperature of the fuse.

At S103, the method adjusts an operation parameter of the power battery based on the overload state of the power battery to control the power battery to operate in the normal operation state.

Exemplarily, when the power battery is operating or running, the first temperature of the relay, the second temperature of the fuse, the third temperature of the sampling circuit, and the first current sampled by the sampling circuit are obtained, and the first current is corrected by the sampling circuit based on the third temperature. The first temperature of the relay in the first preset time is compared with the first preset threshold, the second temperature of the fuse in the second preset time is compared with the second preset threshold, and the first current sampled by the sampling circuit is compared with the third preset threshold.

When the first temperature of the relay in the first preset time exceeds the first preset threshold and/or the second temperature of the fuse in the second preset time exceeds the second preset threshold, and the first current sampled by the sampling circuit exceeds the third preset threshold, it may be considered that the power battery is in the overload state. At this time, it is necessary to reduce the output power of the power battery to reduce the current inside the power battery to protect the power battery.

After the output power of the power battery is reduced for the third preset time, the second current sampled by the sampling circuit is compared with the first current. If the second current is greater than or equal to the first current, it means that although the output power of the power battery is reduced, the current of the power battery is not reduced actually, and a short-circuit fault has occurred in the power battery. At this time, the battery management system or the vehicle relay control the relay to be disconnected to further protect the power battery. The battery control method provided in embodiments realizes maintaining the power battery to be in the normal operation and improves the safety of the power battery.

In some embodiments, FIG. 17 is a schematic diagram of a control circuit according to some embodiments of the present disclosure. As shown in FIG. 17, the control circuit 30 in the embodiments of the present disclosure includes the following.

An obtaining module 171 is configured for obtaining a temperature of the switch circuit and a first current sampled by the sampling circuit.

A determining module 172 is configured for determining an operation state of the power battery based on the temperature and the first current; wherein the operation state includes a normal operation state and an overload state.

An adjusting module 173 is configured for adjusting an operation parameter of the power battery based on the overload state of the power battery, so as to control the power battery to operate in the normal operation state.

In the control circuit provided in an embodiment of the present disclosure, temperature of the switch circuit and first current sampled by the sampling circuit are obtained, the operation state of the power battery is determined based on the temperature and the first current; wherein the operation state includes a normal operation state and an overload state. the operation parameter of the power battery is adjusted based on the operation state of the power battery to control the power battery to operate in the normal operation state. As the operation state of the power battery is determined and the operation parameter of the power battery is adjusted, the normal operation of the power battery is maintained and the safety of the power battery is improved.

## Claims

1. A control system for a power battery comprising a battery pack and a bus bar; the control system comprising:
a switch circuit, connected between the battery pack and the bus bar and configured to obtain and output a temperature of the switch circuit;
a sampling circuit, connected between the battery pack and the bus bar and configured to sample a current of the battery pack; and
a control circuit, connected to the switch circuit and the sampling circuit and configured to determine a state of the power battery and control performing a corresponding operation according to the state of the power battery.

2. The control system of claim 1, wherein the state of the power battery comprises a short-circuit state, an overload state, and a normal operation state, an operation corresponding to the short-circuit state is controlling the switch circuit to be disconnected, and an operation corresponding to the overload state is adjusting an operation parameter of the power battery to make the power battery be in the normal operation state.

3. The control system of claim 1or 2, wherein the switch circuit comprises:
a relay, connected between the battery pack and the bus bar; and
a fuse, connected between the battery pack and the bus bar;
the temperature of the switch circuit comprises a first temperature of the relay and a second temperature of the fuse; and
the control circuit determines a current state of the power battery according to the current of the battery pack and the first temperature of the relay and/or the second temperature of the fuse.

4. The control system of claim 3, wherein the control circuit determines the current state of the power battery to be the overload state, in response to the current of the battery pack exceeding a preset current threshold, and the first temperature of the relay exceeding a first preset threshold within a first preset time and/or the second temperature of the fuse exceeding a second preset threshold within a second preset time.

5. The control system of claim 3, wherein the control circuit determines the current state of the power battery to be the short-circuit state, in response to the current of the battery pack being less than a first preset current threshold and greater than a second preset current threshold, and the first temperature of the relay being greater than a first preset temperature threshold and/or the second temperature of the fuse being greater than a second preset temperature threshold; wherein the first preset current threshold is greater than the second preset current threshold.

6. The control system of claim 5, wherein the control circuit determines the current state of the power battery to be the short-circuit state, in response to the current of the battery pack being less than the first preset current threshold and greater than the second preset current threshold, and the first temperature of the relay having a temperature rise rate greater than a first temperature rise rate threshold within a first preset time and/or the second temperature of the relay having a temperature rise rate greater than a second temperature rise rate threshold within a second preset time; or
the control circuit determines the current state of the power battery to be the short-circuit state, in response to the current of the battery pack being less than the first preset current threshold and greater than the second preset current threshold, and the first temperature of the relay having a temperature value exceeding a first temperature threshold and/or the second temperature of the relay having a temperature value exceeding a second temperature threshold.

7. The control system of claim 2, wherein the sampling circuit samples a first current of the battery pack;
the control circuit determines a current state of the power battery to be the overload state according to the temperature of the switch circuit and the first current of the battery pack, and controls adjusting an operation parameter of the power battery to make the power battery be in the normal operation state;
the sampling circuit samples a second current of the battery pack within a third preset time after the control circuit controls adjusting the operation parameter of the power battery; and
the control circuit further obtains the second current of the battery pack, and determines the current state of the power battery to become the short-circuit state in response to the second current being greater than or equal to the first current.

8. The control system of any one of claims 2-7, wherein the adjusting the operation parameter of the power battery comprises:
reducing an output power of the power battery.

9. The control system of any one of claims 2-7, wherein the switch circuit comprises:
a relay, connected between the battery pack and the bus bar;
a first temperature sensor, connected to the relay and configured to obtain the first temperature of the relay; and
a relay control sub-circuit, connected to the first temperature sensor; and
the control circuit comprises:
a battery management circuit, connected to the relay control sub-circuit and configured to issue a first control instruction in response to the first temperature and the current of the battery pack, such that the relay control sub-circuit controls the relay to be disconnected in response to the first control instruction such that the switch circuit is controlled to be disconnected; and
a vehicle controller, connected to the relay control sub-circuit and configured to issue a second control instruction in response to the first control instruction being not issued or being not responded by the relay control sub-circuit, such that the relay control sub-circuit controls the relay to be disconnected in response to the second control instruction such that the switch circuit is controlled to be disconnected.

10. The control system of claim 9, wherein the battery management circuit is connected to the relay control sub-circuit through a power supply line to transmit the first control instruction, and the vehicle controller is connected to the relay control sub-circuit through a communication line to transmit the second control instruction; and/or
the first temperature sensor is integrated in the relay control sub-circuit.

11. The control system of any one of claims 1-10, wherein the sampling circuit comprises:
a conductor portion, connected between the battery pack and the bus bar and configured to conduct currents;
a third temperature sensor, disposed on a surface of the conductor portion and configured to obtain a temperature of the conductor portion as a third temperature of the sampling circuit; and
a processor, connected to the third temperature sensor and the control circuit, disposed on the surface of the conductor portion, and configured to obtain the third temperature and the current of the battery pack and correct the current of the battery pack based on the third temperature.

12. The control system of claim 11, wherein the surface of the conductor portion comprises a first surface and a second surface;
wherein the third temperature sensor is disposed on the first surface of the conductor portion, the processor is disposed on the second surface of the conductor portion, and the first surface is adjacent to the second surface.

13. The control system of any one of claims 1-12, wherein the switch circuit comprises:
a fuse, connected between the battery pack and the bus bar and configured to be fused in response to the current of the battery pack being greater than a first preset current threshold;
a second temperature sensor, connected to the fuse and the control circuit respectively, disposed on a housing of the fuse, and configured to a second temperature of the fuse.

14. A power battery, comprising:
a battery pack;
a bus bar; and
a control system, connected between the battery pack and the bus bar and as claimed in any one of claims 1-13.

15. A control method for a power battery, the power battery comprising a battery pack, a bus bar, and the control system as claimed in any one of claims 1-13 and connected between the battery pack and the bus bar; the control method comprising:
obtaining, by the control circuit, a temperature of the switch circuit and a current of the battery pack sampled by the sampling circuit; and
determining, by the control circuit, a state of the power battery and control performing a corresponding operation according to the state of the power battery.
